# EUROPEAN PATENT SPECIFICATION

(11) **EP 1 571 637 B1**
(45) Date of publication and mention of the grant of the patent: **02.04.2008**
(21) Application number: 04100825.1
(22) Date of filing: 02.03.2004
(51) Int. Cl.: G08G 1/16, B60Q 1/52, B60K 28/06

(54) **Lane departure warning technique**
Warnsystem bei Verlassen der Fahrspur
Système d'alarme d'un écart par rapport a la trajectoire

(43) Date of publication of application: 07.09.2005
(73) Proprietor: Scania CV Aktiebolag (publ), 151 87 Södertälje (SE)
(72) Inventor: Fagerberg, Kalle, 151 87 Södertälje (SE); Deram, Pauline, 151 87 Södertälje (SE)
(74) Representative: Röthinger, Rainer

(56) References cited:
- WO-A-00/54008
- DE-A- 10 311 518
- US-A- 5 225 827
- US-A- 5 745 031
- US-A- 5 925 082

## Description

### Field of the Invention

The present invention relates to vehicle safety systems. More specifically, the invention relates to the prevention of unintended lane departures of vehicles such as trucks and passenger cars.

### Background of the Invention

Unintended lane departure is one of the main causes of fatal traffic accidents. There are many catalysts for unintended lane departure relating to driver alertness such as mobile phone use, changing radio stations, and falling asleep at the wheel.

Conventional lane departure warning systems as described, for example, in EP 1 074 430 A1 are configured to recognize differences between road and lane markings on a road surface. Such systems include a camera for tracking the visible lane markings and an image processor to determine the vehicle position relative to the lane markings. When a vehicle crosses or is about to cross the lane markings, the lane departure warning system automatically provides a warning to the driver of the vehicle.

Another lane departure warning system is known from FR 2 759 647 A1. The lane departure warning system includes a plurality of infrared emitters and infrared detectors that are mounted at the bottom of a vehicle and directed towards the road surface. When a vehicle crosses a lane marking, the infrared emitters and detectors recognize the transition form a regular road surface to a road surface on which lane markings are arranged. Once such a transition is detected, the lane departure warning system automatically outputs a warning to the vehicle driver.

WO 00/54008 A1 also discloses a lane departure warning system using a GPS or DGPS system for determining the absolute position of a vehicle and then determining the location of the vehicle relative to the edges of a roadway.

Also known are alarm systems for generating a warning if the vehicle driver is found to become drowsy. In the drowsiness alarm system described in EP 0 048 492 A2, various activity-related parameters like the steering angle or the steering frequency are monitored and assessed to determine if a vehicle driver becomes drowsy.

DE-10311518-A discloses a lane departure warning system taking driver alertness into account. In this system the track of the vehicle that is to be expected is determined and the future reactions of the driver are taken into consideration when this is determined. The expected track of the vehicle is then compared with detected edge markings.

In many cases a vehicle driver intentionally approaches or crosses lane markings. One drawback of conventional lane departure warning systems is that, in such cases, false warnings can be generated. Such false warnings are not only disturbing but may also negatively affect driving safety.

Accordingly, it will be appreciated that there remains a need for an improved lane departure warning technique that is capable of reducing the amount of false warnings when a lane marking is approached or crossed consciously.

### Summary of the Invention

According to one aspect of the invention, a method is provided for generating an alarm signal indicative of an unintended lane departure of a vehicle. The method comprises the steps of determining a first parameter indicative of lane boundary position and a second parameter indicative of a level of vehicle driver alertness, determining a virtual lane boundary based on the first and second parameters, determining the position of the vehicle relative to the virtual lane boundary, and generating an alarm signal in the case of an actual or forthcoming crossing of a virtual lane boundary.

The decision whether or not to generate an alarm signal is thus not dependent on the actual or forthcoming crossing of a real lane boundary (typically a lane marking, a curb, the shoulder of the road, or something similar) but on the crossing of a virtual lane boundary. The virtual lane boundary provides an adaptable tolerance zone, within which actual crossings of the lane boundary may be tolerated. In other words, the tolerance zone may extend, relative to the vehicle, beyond the lane boundary. However, the virtual lane boundary may also be adjusted such that it does not extend beyond the lane boundary but provides a buffer zone that ensures that the vehicle maintains a fixed or variable minimum distance to the lane boundary.

The provision of the virtual lane boundary helps reduce false warnings because it may be adjusted depending on the alertness level of the vehicle driver. If the driver is found to be attentive (or alert), the virtual lane boundary may coincide with the lane boundary or may even extend beyond the lane boundary. In other words, the crossing of the lane boundary by an attentive driver is accepted and no false warning is generated. On the other hand, if the driver is found to be not alert (or inattentive), the virtual lane boundary may be adjusted such that the vehicle is kept at a distance from the lane boundary.

The first parameter indicative of the lane boundary position may be indicative of the vehicle position on the road. Typically, the first parameter indicates the lateral distance between the lane boundary and the vehicle (i.e, the position of the lane boundary relative to the vehicle).

The second parameter is indicative of an alertness level (or, which may be equivalent, the attentiveness level) of a vehicle driver. The virtual lane boundary may be adapted depending on variations of the second parameter. This adaptation may be performed in fixed or varying time intervals. The time interval between two successive adaptations may be adjusted depending on one or more factors, such as the cruising time since the vehicle was started, the ambient illumination, the rate at which the second parameter is provided, and so on.

The method may additionally comprise the step of determining the alertness level. The step of determining the alertness level may include two or more sub-steps. In a first sub-step a short term grade indicative of one or more short term events and a long term grade indicative of one or more long term events may be determined. Preferably, the one or more short term events are related to a state of distraction of the vehicle driver. The one or more long term events may be related to a state of drowsiness.

The short term grade may be updated more often than the long term grade. The long term grade may, for example, be updated in the order of second or minutes, whereas the short term grade may be updated in the millisecond range. Preferably, the long term grade is updated approximately every 30 seconds to 5 minutes and the short term grade is updated every ten to 100 ms.

The alertness level may be derived from the extremal value of the short term grade and the long term grade. If, for example, a high long term grade is indicative of a drowsy driver and a high short term grade is indicative of a distracted driver, the alertness level may be determined as a maximum value of the long term grade and the short term grade.

In addition to the first and second parameters, one or more further parameters may be determined and taken into account when determining the virtual lane boundary. Accordingly, the method may further comprise the step of determining at least one vehicle-related third parameter. The virtual lane boundary may then be adapted also dependent on the third parameter. The at least one vehicle-related third parameter may be selected from the group consisting of: vehicle speed, lateral velocity of the vehicle, steering wheel angle, angular velocity of the steering wheel, pedal actuation state, and pedal travel.

Taking into account two or more parameters, the virtual lane boundary may be adjusted between an upper value and a lower value. Depending on the alertness level, the virtual lane boundary may be moved closer to the upper value or to the lower value. In the case of a highly attentive driver, for example, the virtual lane boundary may be adjusted to the upper value. On the other hand, the lower value may be selected as virtual lane boundary if the driver is found to not be alert.

At least the upper value of the virtual lane boundary may be adaptable. The upper value may, for example, be adapted dependent on the first and the third parameter, and the position of the virtual lane boundary between the upper value and the lower value may be determined based on the second parameter.

The present invention may be implemented as software, as one or more pieces of hardware, or as a combination thereof. Hence, according to a further aspect of the invention, a computer program product with program code portions for performing the individual steps of the invention when the computer program is run on one or more computing devices is provided. The computer program product may be stored on a computer readable recording medium.

According to a still further aspect of the invention, a lane departure warning system for vehicles is provided. The system comprises a lane departure recognition unit for determining a first parameter indicative of a lane boundary position, a driver alertness monitoring unit for determining a second parameter indicative of a level of vehicle driver alertness, an alarm unit, and an alarm control unit for determining a virtual lane boundary based on the first and second parameters, for determining the position of the vehicle relative to the virtual lane boundary, and for activating the alarm unit in the case of an actual or forthcoming crossing of the virtual lane boundary.

The driver attention monitoring unit may include a sensor coupled to a steering wheel of the vehicle to monitor steering behaviour. Additionally or alternatively, one or more further sensors may be provided, such as a speed sensor, one or more pedal sensors, and the like.

The lane departure recognition system may be configured in various ways. It may for example be configured as an optical system including image processing capabilities as described in EP 1 074 430 A1. Such optical systems typically detect lane markings or other visible features and determine the position of the vehicle relative to the detected features. However, the lane departure recognition unit need not necessarily be configured as an optical system. It may alternatively or additionally be based on other mechanisms, such as ultrasonic techniques, that determine the distance to three-dimensional objects. Also, an approach similar to the infrared approach taught in FR 2 759 647 A1 could be used.

### Brief Description of the Drawings

Further aspects and advantages of the invention will become apparent upon studying the following detailed description of preferred embodiments in conjunction with the accompanying drawings, in which
- Fig. 1: schematically shows the utilization of a virtual lane boundary in accordance with the present invention;
- Fig. 2: is a schematic flowchart of a method according to a one embodiment of the invention;
- Fig. 3: is a schematic diagram of a method according to a further embodiment of the invention; and
- Fig. 4: is a schematic diagram of a lane departure warning system according to another embodiment of the present invention.

### Detailed Description of Preferred Embodiments

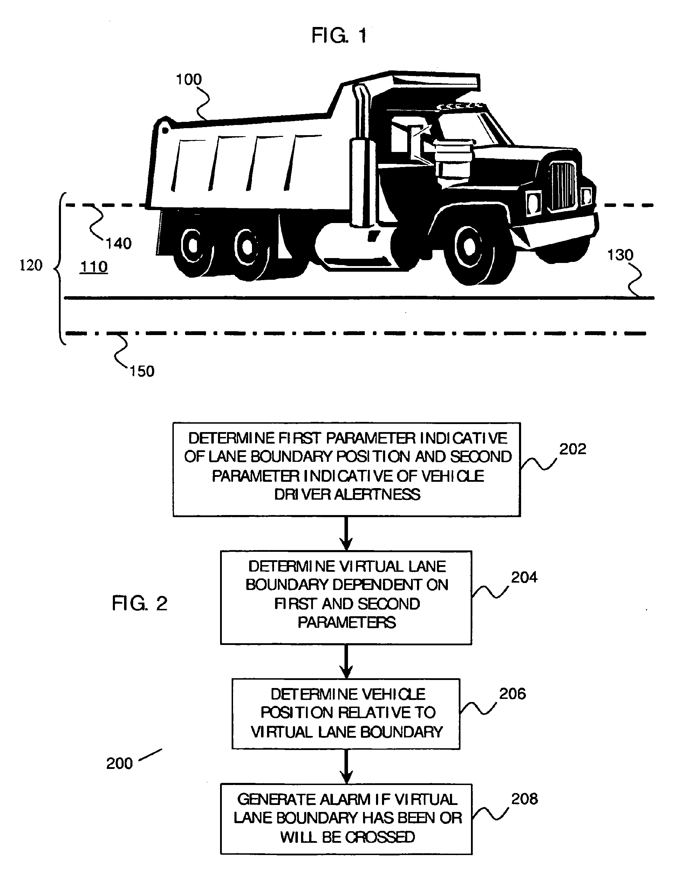

Fig. 1 illustrates an exemplary arrangement of the invention. In this arrangement, a vehicle 100 is driving on a lane 110 of a road 120. The lane 110 is limited by two lane boundaries 130, 140. A first lane boundary 130 is constituted by the edge of a side walk or a lane marking in the form of a continuous line. The second lane boundary 140 is a dashed lane marking. Such a dashed lane marking 140 typically divides two neighboring road lanes.

Also depicted in Fig. 1 is a virtual lane boundary 150 that extends, relative to the vehicle 100, beyond the first lane boundary 130. Although not shown in Fig. 1, a similar virtual lane boundary could be associated with the second lane boundary 140 on the other side of the vehicle 100.

An alarm signal warning the driver of the vehicle 100 is generated by a lane departure warning system (not shown in Fig. 1) associated with the vehicle 100 each time the vehicle 100 crosses or is about to cross the virtual lane boundary 150. In Fig. 2, a flowchart 200 of a first embodiment of a method for generating such an alarm signal is generated.

The method starts, at step 202, with determining a first parameter indicative of the lane boundary position 130 and a second parameter indicative of a level of vehicle driver alertness 100 (or attentiveness). In a next step 204, the position of the virtual lane boundary 150 is determined based on the first and second parameters.

Then, in step 206, the position of the vehicle 100 relative to the virtual lane boundary 150 is determined. In a final step 208 the alarm signal is generated in the case of an actual or forthcoming crossing of the virtual lane boundary 150.

By continuously or periodically repeating steps 202 to 208, the position of the virtual lane boundary 150, and thus the width of a buffer zone between the first lane boundary 130 and the virtual lane boundary 150, is adapted to the momentary alertness level of the driver. The width may be reduced to zero or below zero (meaning that the virtual lane boundary 150 would be chosen to lie on the road lane 110) if the driver is found to be not alert. On the other hand, a maximum width may be chosen in the case of an attentive driver. As shown in the scenario depicted in Fig. 1, an attentive driver may even be permitted to intentionally cross the first lane boundary 130 without generating an alarm signal because the virtual lane boundary 150 extends beyond the first lane boundary 130.

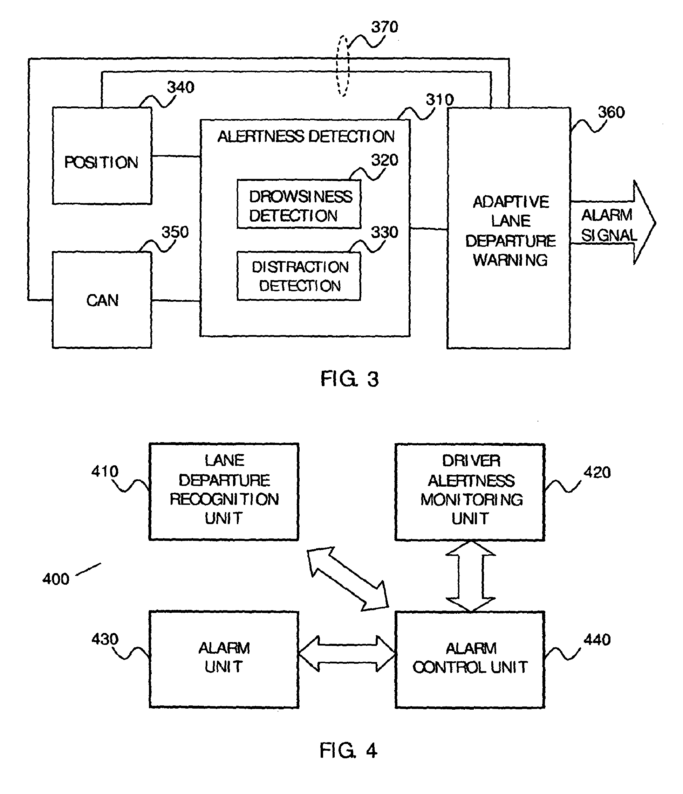

In the following, a further embodiment of the invention will be described with reference to the schematic diagram 300 of Fig. 3. As shown in Fig. 3, a first functional component 310 is provided for determining the alertness level (or a parameter indicative thereof) of a driver. The functional component 310 includes a first sub-component 320 for drowsiness detection and a second functional component 330 for distraction detection.

A further functional component 340 determines the position of the vehicle on the road in relation to one or more lane boundaries as well as the lateral velocity of the vehicle (or respective parameters indicative thereof). A third functional component 350 in the form of a CAN bus known to the skilled artisan provides a plurality of vehicle-related parameters. The third functional component 350 provides vehicle-related parameters such as at least one of vehicle speed, steering wheel angle, angular velocity of the steering wheel, actuation state of one or more pedals (like the brake, acceleration and/or clutch pedal) and information about pedal travel (indicating how far a pedal has been depressed, e.g., within a percentage range of 0 and 100 %).

A fourth functional unit 360 is configured to evaluate signals received at least from the functional components 310 and 340 to determine whether or not to generate an alarm signal.

The alertness level is determined by the functional component 310 as follows. In a first step, a drowsiness grade (or level) and a distraction grade (or level) are determined. The drowsiness grade can be considered as a long term grade, whereas the distraction grade may be considered as a short term grade.

The drowsiness grade, as a long term grade, may be determined on the basis of one or more parameters indicative of long term events. These parameters, which can be derived from signals received from the functional components 340 and 350, include steering wheel angle, angular velocity of the steering wheel, and the distance of the vehicle from the middle of the lane (i.e., the portion of the road between the first lane boundary 130 and the second lane boundary 140 of Fig. 1). These three parameters are subjected to processing operations to obtain a measurement of the drowsiness, such as the mean value of the lateral vehicle position or the power of the high-frequency components of the steering wheel. This information is processed further to obtain a drowsiness grade. The drowsiness grade thus obtained may range between a lower value (such as 0) and an upper value (such as 2), the upper value indicating that the driver is drowsy. Being a long term grade, the drowsiness grade is updated every few seconds or minutes. Preferably, the drowsiness grade is updated every minute or so.

The distraction grade, being a short term grade, is determined on the basis of parameters indicative of short term events. Such parameters, which may be derived from signals received from the functional components 340, 350, include steering wheel angle, angular velocity of the steering wheel, lateral velocity, position of the accelerator pedal, and the distances of the vehicle to the lane boundaries (reference numerals 130 and 140 in Fig. 1). In order to obtain a measurement for distraction, the sum of the square of the steer wheel angle and the square of the angular velocity of the steering wheel is divided by three. The value thus obtained is processed further taking into account one or more of the remaining short term parameters outlined above to obtain a distraction grade. The distraction grade may range between a lower value (such as 0) and an upper value (such as 2), the upper value indicating that the driver is distracted. Being a short term grade, the distraction grade may be updated every few milliseconds, preferably every 40 milliseconds.

The drowsiness grade and the distraction grade are continuously determined (although it will be appreciated that they also may be detected at periodic intervals). Also continuously determined is the alertness level from the drowsiness grade and the distraction grade. Preferably, the alertness level is approximately determined in the same time interval as the short term grade, i.e. the distraction grade. This means in the present embodiment that the alertness level is determined approximately every 40 milliseconds.

The alertness level may be determined by taking into account one or both of the drowsiness grade and the distraction grade. In a present embodiment of the invention, the alertness level is chosen to be the maximum value of either the drowsiness grade or the distraction grade.

Once the alertness level has been determined by the functional component 310, it is input to the functional component 360. The functional component 360 further receives vehicle-related parameters 370 from the functional components 350 and 340. Based on the alertness level and vehicle-related parameters such as the position of one or more lane boundaries, the functional component 360 determines a virtual lane boundary as shown in Fig. 1 and a position of the vehicle relative to the virtual lane boundary.

If the functional component 360 determines that the vehicle is crossing or about to cross the virtual lane boundary, it outputs an alarm signal to warn the driver. The functional component, in some variations, incorporates a fuzzy logic device for adaptively determining when to output an alarm signal based on the driving characteristics of the driver.

Fig. 4 shows a lane departure warning system 400 according to one embodiment of the invention. The lane departure warning system may be incorporated in the vehicle 100 shown in Fig. 1.

The lane departure warning system 400 comprises a lane departure recognition unit 410 for determining a first parameter indicative of lane boundary position, a driver alertness monitoring unit 420 for determining a second parameter indicative of a level of vehicle driver alertness, an alarm unit 430, and an alarm control unit 440.

The alarm control unit 440 determines a virtual lane boundary based on the first and second parameters received from the lane departure recognition unit 410 and the driver alertness monitoring 420 respectively. It also determines the position of the vehicle relative to the virtual lane boundary and activates the alarm unit 430 in the case of an actual or forthcoming crossing of the virtual lane boundary. The alarm unit 430 may be configured to optically and/or acoustically alert the driver. In the present embodiment, the lane departure recognition unit 410 is configured as an imaging system that includes a camera and an image processor. The camera is mounted to the shield, dashboard or overhead of the vehicle and tracks lane boundaries. The image information generated by the camera is fed to the image processor which provides information indicative of the position of a lane boundary to the alarm control unit 440.

As has become apparent from the above, the implementation of a virtual lane boundary that may be adapted based on an alertness level of a vehicle driver reduces false warnings in the case the driver is found to be attentive. This reduction is, in large part, due to the fact that the use of a virtual lane boundary allows intentional lane crossings by an attentive driver.

While the present invention has been described with respect to particular embodiments (including certain system arrangements and certain orders of steps within various methods), those skilled in the art will recognize that the present invention is not limited to the specific embodiments described and illustrated herein. Therefore, while the present invention has been described in relation to its preferred embodiments, it is to be understood that this disclosure is only illustrative. Accordingly, it is intended that the invention be limited only by the scope of the claims appended hereto.

## Claims

1. A method of generating an alarm signal indicative of an unintended lane departure of a vehicle (100), the method comprising the step of
- determining a first parameter indicative of lane boundary position (130) and a second parameter indicative of a level of vehicle driver alertness;
and **characterised by** the steps of:
- determining a virtual lane boundary (150) based on the first and second parameters;
- determining the position of the vehicle relative to the virtual lane boundary; and
- generating an alarm signal in the case of an actual or forthcoming crossing of the virtual lane boundary.

2. The method of claim 1, wherein the virtual lane boundary is adapted based on variations of the second parameter.

3. The method of claim 2, wherein the adaptation is performed in fixed or varying time intervals.

4. The method of any of the preceding claims, further comprising the step of determining the alertness level.

5. The method of claim 4, wherein the step of determining the alertness level includes:
- determining a short term grade indicative of one or more short term events and a long term grade indicative of one or more long term events; and
- deriving the alertness level from at least one of the short term grade and the long term grade.

6. The method of claim 5, wherein the one or more short term events are related to a state of distraction and/or wherein the one or more long term events are related to a state of drowsiness.

7. The method of claim 5 or 6, further comprising determining the alertness level as a maximal value of the short term grade and the long term grade.

8. The method of any of claims 5 to 7, further comprising updating the short term grade more often than the long term grade.

9. The method of any of the preceding claims, wherein the virtual lane boundary is adjustable between an upper value and a lower value.

10. The method of any of the preceding claims, wherein the virtual lane boundary is adjustable, relative to the vehicle, beyond the lane boundary.

11. The method of any of the preceding claims, further comprising the step of determining at least one vehicle-related third parameter, wherein the virtual lane boundary is adapted also based on the third parameter.

12. The method of any of the preceding claims, wherein the at least one vehicle-related third parameter is selected from the group consisting of: vehicle speed, lateral velocity of the vehicle, steering wheel angle, angular velocity of the steering wheel, pedal actuation state, and pedal travel.

13. A computer program product comprising program code portions for performing the steps of any of claims 1 to 12 when the computer program product is run on a computing device.

14. The computer program product of claim 13, stored on a computer readable recording medium.

15. A lane departure warning system (400) for vehicles, comprising:
- a lane departure recognition unit (410) for determining a first parameter indicative of lane boundary position;
- a driver alertness monitoring unit (420) for determining a second parameter indicative of a level of vehicle driver alertness;
- an alarm unit (430); and **characterised by**
- an alarm control unit (440) for determining a virtual lane boundary based on the first and second parameters, for determining the position of the vehicle relative to the virtual lane boundary, and for activating the alarm unit in the case of an actual or forthcoming crossing of the virtual lane boundary.

## Patentansprüche

1. Verfahren zum Erzeugen eines Alarmsignals, welches auf eine unbeabsichtigte Fahrbahnabweichung eines Fahrzeugs (100) hinweist, wobei das Verfahren folgenden Schritt umfasst:
- Bestimmen eines ersten Parameters, der auf eine Position (130) einer Fahrbahnbegrenzung hinweist, und eines zweiten Parameters, der auf einen Aufmerksamkeitspegel eines Fahrers des Fahrzeuges hinweist;
und durch die folgenden Schritte **gekennzeichnet** ist:
- Bestimmen einer virtuellen Fahrbahnbegrenzung (150) auf der Grundlage des ersten und des zweiten Parameters;
- Bestimmen der Fahrzeugposition bezüglich der virtuellen Fahrbahnbegrenzung; und
- Erzeugen eines Alarmsignals im Fall eines tatsächlichen oder bevorstehenden Überquerens der virtuellen Fahrbahnbegrenzung.

2. Verfahren nach Anspruch 1, wobei die virtuelle Fahrbahnbegrenzung auf der Grundlage von Änderungen des zweiten Parameters angepasst wird.

3. Verfahren nach Anspruch 2, wobei die Anpassung in festen oder veränderlichen Zeitabständen durchgeführt wird.

4. Verfahren nach einem der vorherigen Ansprüche, ferner umfassend den Schritt des Bestimmens des Aufmerksamkeitspegels.

5. Verfahren nach Anspruch 4, wobei der Schritt des Bestimmens des Aufmerksamkeitspegels beinhaltet:
- Bestimmen eines Kurzzeit-Grades, welcher auf einen oder mehrere Kurzzeit-Ereignisse hinweist, und eines Langzeit-Grades, welcher auf eines oder mehrere Langzeit-Ereignisse hinweist; und
- Ableiten des Aufmerksamkeitspegels aus wenigstens einem von dem Kurzzeit-Grad und dem Langzeit-Grad.

6. Verfahren nach Anspruch 5, wobei das eine oder die mehreren Kurzzeit-Ereignisse auf einen Zustand der Ablenkung bezogen sind und/oder wobei das eine oder die mehreren Langzeit-Ereignisse auf einen Zustand der Schläfrigkeit bezogen sind.

7. Verfahren nach Anspruch 5 oder 6, ferner umfassend das Bestimmen des Aufmerksamkeitspegels als dem Maximalwert des Kurzzeit-Grades und des Langzeit-Grades.

8. Verfahren nach einem der Ansprüche 5 bis 7, ferner umfassend ein häufigeres Aktualisieren des Kurzzeit-Grades als des Langzeit-Grades.

9. Verfahren nach einem der vorangehenden Ansprüche, wobei die virtuelle Fahrbahnbegrenzung zwischen einem unteren Wert und einem oberen Wert einstellbar ist.

10. Verfahren nach einem der vorangehenden Ansprüche, wobei die virtuelle Fahrbahnbegrenzung bezüglich des Fahrzeugs jenseits der Fahrbahnbegrenzung einstellbar ist.

11. Verfahren nach einem der vorangehenden Ansprüche, ferner umfassend den Schritt des Bestimmens wenigstens eines auf das Fahrzeug bezogenen dritten Parameters, wobei die virtuelle Fahrbahnbegrenzung auch auf der Grundlage des dritten Parameters angepasst wird.

12. Verfahren nach einem der vorangegangenen Ansprüche, wobei der wenigstens eine auf das Fahrzeug bezogene dritte Parameter aus folgender Gruppe ausgewählt ist, die aus Folgendem besteht: Fahrzeuggeschwindigkeit, laterale Geschwindigkeit des Fahrzeugs, Lenkradwinkel, Winkelgeschwindigkeit des Lenkrades, Pedalbetätigungszustand und Pedal-Betätigungsweg.

13. Computerprogrammprodukt umfassend Programmcodeabschnitte zum Durchführen der Schritte eines der Ansprüche 1 bis 12, wenn das Computerprogrammprodukt auf einer Computereinrichtung abläuft.

14. Computerprogrammprodukt nach Anspruch 13, gespeichert auf einem computerlesbaren Aufzeichnungsmedium.

15. Fahrbahnabweichungswarnsystem (400) für Fahrzeuge, umfassend:
- eine Fahrbahnabweichungs-Erkennungseinheit (410) zum Bestimmen eines ersten Parameters, der auf eine Position einer Fahrbahnbegrenzung hinweist;
- eine Fahreraufmerksamkeits-Überwachungseinheit (420) zur Bestimmung eines zweiten Parameters, der auf einen Aufmerksamkeitspegel eines Fahrers des Fahrzeugs hinweist;
- eine Alarmeinheit (430); und die **gekennzeichnet ist durch**
- eine Alarmsteuerungseinheit (440) zur Bestimmung einer virtuellen Fahrbahnbegrenzung auf der Grundlage des ersten und des zweiten Parameters, zur Bestimmung des Position des Fahrzeugs bezüglich der virtuellen Fahrbahnbegrenzung, und zur Aktivierung der Alarmeinheit im Fall eines tatsächlichen oder bevorstehenden Überquerens der virtuellen Fahrbahnbegrenzung.

## Revendications

1. Procédé de génération d'un signal d'alarme indiquant un écart de trajectoire involontaire d'un véhicule (100), le procédé comprenant l'étape consistant à :
- déterminer un premier paramètre indiquant la position (130) de limite de voie et un deuxième paramètre indiquant un niveau de vigilance du conducteur du véhicule ;
et **caractérisé par** les étapes consistant à:
- déterminer une limite (150) de voie virtuelle en se basant sur les premier et deuxième paramètres ;
- déterminer la position du véhicule par rapport à la limite de voie virtuelle ; et
- générer un signal d'alarme dans le cas d'un chevauchement réel ou à venir de la limite de voie virtuelle.

2. Procédé selon la revendication 1, dans lequel la limite de voie virtuelle est adaptée en se basant sur les variations du deuxième paramètre.

3. Procédé selon la revendication 2, dans lequel l'adaptation est exécutée dans des intervalles de temps fixes ou variables.

4. Procédé selon l'une quelconque des précédentes revendications, comprenant en outre l'étape consistant à déterminer le niveau de vigilance.

5. Procédé selon la revendication 4, dans lequel l'étape consistant à déterminer le niveau de vigilance comprend :
- la détermination d'un degré à court terme indiquant un ou plusieurs événements à court terme et un degré à long terme indiquant un ou plusieurs événements à long terme ; et
- une dérivation du niveau de vigilance à partir d'au moins un des degrés à court et à long terme.

6. Procédé selon la revendication 5, dans lequel le ou les événements à court terme sont liés à un état de distraction et/ou dans lequel le ou les événements à long terme sont liés à un état de somnolence.

7. Procédé selon la revendication 5 ou 6, comprenant en outre une détermination du niveau de vigilance comme une valeur maximale du degré à court terme et du degré à long terme.

8. Procédé selon l'une quelconque des revendications 5 à 7, comprenant en outre une mise à jour du degré à court terme plus souvent que le degré à long terme.

9. Procédé selon l'une quelconque des précédentes revendications, dans lequel la limite de voie virtuelle est réglable entre une valeur supérieure et une valeur inférieure.

10. Procédé selon l'une quelconque dès précédentes revendications, dans lequel la limite de voie virtuelle est réglable, par rapport au véhicule, au-delà de la limite de voie.

11. Procédé selon l'une quelconque des précédentes revendications, comprenant en outre l'étape consistant à déterminer au moins un troisième paramètre associé au véhicule, dans lequel la limite de voie virtuelle est adaptée également en se basant sur le troisième paramètre.

12. Procédé selon l'une quelconque des précédentes revendications, dans lequel l'au moins troisième paramètre associé au véhicule est sélectionné dans le groupe constitué de : la vitesse du véhicule, la vitesse latérale du véhicule, l'angle du volant, la vitesse angulaire du volant, l'état de fonctionnement de la pédale, et la course de la pédale.

13. Produit de programme informatique comprenant des parties de code de programme pour exécuter les étapes de l'une quelconque des revendications 1 à 12 lorsque le produit de programme informatique est actionné par un dispositif informatique.

14. Produit de programme informatique selon la revendication 13, stocké sur un moyen d'enregistrement lisible par ordinateur.

15. Système (400) d'avertissement d'écart de trajectoire pour véhicules, comprenant :
- une unité (410) de reconnaissance d'écart de trajectoire pour déterminer un premier paramètre indiquant une position de limite de voie virtuelle;
- une unité (420) de surveillance de vigilance du conducteur pour déterminer un deuxième paramètre indiquant un niveau de vigilance du conducteur du véhicule ;
- une unité (430) d'alarme ; et **caractérisé par**
- une unité (440) de contrôle d'alarme pour déterminer une limite de voie virtuelle en se basant sur les premier et deuxième paramètres, pour déterminer la position du véhicule par rapport à la limite de voie virtuelle et pour activer l'unité d'alarme dans le cas d'un chevauchement réel ou à venir de la limite de voie virtuelle.
